Europäisches Patentamt

**European Patent Office**

Office européen des brevets

(19)

(11) Publication number: **0 125 776**
A2

(12) # EUROPEAN PATENT APPLICATION

(21) Application number: **84302312.8**

(51) Int. Cl.³: **G 05 B 19/42**

(22) Date of filing: **04.04.84**

(30) Priority: **13.04.83 US 484585**

(43) Date of publication of application:
**21.11.84 Bulletin 84/47**

(84) Designated Contracting States:
**DE FR GB IT**

(71) Applicant: **NORDSON CORPORATION**
**555 Jackson Street P. O. Box 151**
**Amherst Ohio 44001(US)**

(72) Inventor: **Olex, Michael B.**
**Westwood Road**
**Bay Village Ohio 44140(US)**

(74) Representative: **Allen, Oliver John Richard et al,**
**Lloyd Wise, Tregear & Co. Norman House 105-109 Strand**
**London, WC2R 0AE(GB)**

(54) **Robot control system.**

(57) A control system for a work robot having a number of articulated links in which the control system drives the work robot to spray paint a workpiece under closed loop servo control in response to a sequence of recorded link position instructions read from a robot program memory. The control system includes a number of control circuits communicating on a common bus to concurrently drive the work robot, issue commands to devices which operate in conjunction with the work robot, and exchange information with an operator through a keyboard and display. The control system includes a pair of computers which are bus masters capable of initiating communications on the bus. The control system functions are divided between the two master computers, which operate substantially independently of one another, with a limited degree of communication through a buffer memory on the bus. Each master computer is microprocessor-based, and each microprocessor concurrently executes a different program of separate program processes in order to perform the requisite control functions for the robot.

## ROBOT CONTROL SYSTEM

This invention relates generally to a control system for a work robot including a controller for driving at least one articulated robot link under closed loop servo control in response to a stored program of recorded link position instructions. The invention is disclosed particularly in relation to a work robot for spray painting a workpiece in which the control system serves to move and operate a paint spray gun on an articulated robot arm. The invention more particularly concerns, with regard to a control system for such a work robot, the provision of multi-master computers communicating on a common bus in which the control functions for the robot control system are apportioned between the two master computers. The invention also concerns, with regard to a computer-based control system for such a work robot, the concurrent execution of separate program modules in performing the control functions of the robot control system.

A work-performing robot, or manipulator, typically includes a plurality of links interconnected to provide relative motion with a plurality of degrees of freedom. The links are each provided with a signal-controlled actuator for powering the respective links, as well as a position transducer for providing a real-time signal correlated to the actual position of the robot link. In order to provide the actuator

control signals, a sequence of command positions for each link is stored in a suitable memory device and the command positions are periodically retrieved and compared against the actual link position signals provided by the link position transducers. In response to the comparisons, link positional error signals are generated for each of the links and then input to the various link actuators. Therefore, closed loop servo techniques are utilized to drive the various actuators to move the links to the desired command positions.

There are many applications for work robots such as welding and the application of various coating materials. As an illustrative example, a work-performing robot may be used for spray painting specific articles of differing shapes. A program comprising sequences of command positions for the robot links is then produced to effect the movement of the robot for the spraying of paint onto such articles, such program taking into account the specific dimensions and paint requirements of the particular article.

A paint spraying robot typically includes a spray painting gun at the outboard end of the outermost link of a multi-link articulated arm. The gun is controlled to spray paint an article, or workpiece, located at a work station as the robot executes a prerecorded sequence of robot link position commands. In order to control the application of paint by the gun, the spray gun includes a paint flow control valve. An ON/OFF switch is controlled by programmed commands to regulate the spraying of paint from the gun. The gun is responsive to an OFF command to close the paint flow control valve and responsive to an ON command to open the paint flow control valve. The commands to control the flow of paint from the gun shall be referred to herein as gun commands.

In order to control the movement of the work robot, a sequence of command positions for each robot link is stored in a robot program memory. The sequences of command positions for the robot links, taken as a whole, constitute a complete program for a particular movement sequence to be performed by the robot. The gun commands are also stored in the robot program memory, in proper timed relationship to the link position commands, to be sequentially retrieved from the robot program memory and output to the spray gun to control the paint spray valve. Since both the link position commands and the gun commands are processed concurrently, the emission of spray paint is coordinated with the movement of the gun relative to the workpiece.

Production of the prerecorded motion and gun command sequence, known as robot "training" or "teaching", can be accomplished in several ways. In one approach, a lightweight "training robot", or simulator is used which, except for the reduced mass of the training robot and the absence of actuators for the links, is identical in all respects to the considerably more massive work robot which is being programmed. To program the work robot, the output element of the simulator, the spray gun, is grasped manually by the operator doing the programming and moved through a sequence of motions which it is desired to have the work robot subsequently execute. Since the training robot is lightweight, it can be moved manually by the operator through the desired sequence of motions, and position transducers at the joints of its links produce electrical link position signals which are recorded for subsequent servo loop control of the work robot. Simultaneously with the simulator movement, the gun switch is manually operated to control the emission of the paint spray from the gun. The condition of the gun switch is recorded in synchronism with the recording of the link position transducer outputs for subsequent replay by the gun and the work robot, respectively. When the robot program is thereafter replayed, the recorded sequence of gun commands is output to the spray gun in synchronism with the sequence of robot position commands, thereby coordinating spray coating emission with the spray gun position.

In another method of robot programming, the actuators of the work robot are bypassed or decoupled and the work robot is counterbalanced so that the operator may more easily move the work robot through a desired path during training. The robot link position transducer outputs are recorded during this manual programming phase, as are the gun command signals, so that they can be subsequently replayed for execution by the robot and the gun, respectively.

Another approach to training a work robot involves providing the work robot with motion or force-sensing transducers. When an operator attempts to move the work robot during manual programming, the force or motion sensors detect the force or motion applied by the operator to the robot. The force or motion sensor outputs are input to the actuators for moving the individual work robot links in accordance with the manual force or motion applied thereto by the operator. As the robot links move under power assistance, the link position transducer outputs are recorded, along with the gun condition signals, for subsequent replay and execution by the robot and the gun, respectively.

During a robot training or teaching session, such as when using a robot simulator, the operator of the simulator manually controls the movement of the simulator and the operation of the gun switch. The simulator motion and the gun switch conditions are recorded to form the program for the work robot. Typically, the paint spraying simulation executed by the operator is the actual spray painting of a workpiece under the same conditions as will be encountered by the work robot. Therefore, the operator not only moves the gun, but also operates the gun switch to control the spraying of paint in a pattern upon a workpiece. During the training session, the operator applies paint to the workpiece in a manner to obtain an observably satisfactory coating of paint on the workpiece.

Often in the operation of a spray painting robot, the workpieces to be painted are moved by a conveyor past the work robot work station during the spray painting operation. During a training session, a sample workpiece is moved at a particular rate past the robot simulator, while the simulator operator manipulates the training arm and the gun to produce the link position commands and gun commands to form the painting program for the workpiece. In this case, the link position commands are not produced at a particular rate relative to time. Instead, the commands are produced at a rate synchronized with the rate of movement of the workpiece past the work station.

The sequence of link position commands and interleaved gun commands are stored in the format of a sequence of instructions making up a painting program for the work robot. Each instruction contains a number of commands. The rate of recording instructions is synchronized with the rate of production of a workpiece position count, produced, for example, by a conveyor shaft encoder associated with a conveyor which moves the workpiece past the work station.

While the speed of movement of the workpiece past the work station during the training session may be controlled to be a particular nominal speed, the workpiece speed need not be the same during the paint spraying operation performed by the work robot. When the work robot executes the instructions in the paint spraying program, the instructions are provided at a rate synchronized with the actual conveyor speed during the work session. The rate of supplying instructions to the work robot can, therefore, be a rate somewhat higher or lower than that at which the instructions are recorded during the training session.

Programs of link position commands and interleaved gun commands are stored in a mass memory device such as a bubble memory in the robot control system. The robot control system, or controller, receives the commands produced during a training session and stores the commands in the form of a program of instructions in the mass memory device. During a work session, the robot controller retrieves the command positions which have been stored in the memory device for comparison against the actual link position signals which are also coupled to the controller from the work robot. The controller in turn produces link positional error signals based upon the comparisons, which the controller couples to the appropriate link actuators. During the work session the controller also controls the spray gun paint flow valve in response to the gun commands which are retrieved from the memory device with the link position commands.

The robot controller performs a number of functions in addition to recording a program during a training session and executing a program during a work session. For example, the controller has an associated display and keyboard at a controller console. An operator can interface with the controller such as by responding to prompts from the controller on the display and entering commands through the keyboard. For instance, during an editing session, the operator can respond to display prompts to input desired changes to programs already stored in the computer memory device.

In the case of synchronized operation between the work robot and a conveyor carrying a workpiece past the robot, the controller receives conveyor position pulses such as from an encoder at the conveyor. The controller then utilizes the conveyor position pulses to synchronize the provision of link position commands and gun commands to the work robot with the conveyor speed.

A robot control system may be considered to have a number of modes of operation. When a simulator is used during a training session to produce a painting program of command instructions, the controller may be considered to be in a training mode. When the controller is driving the work robot to automatically spray paint workpieces in response to recorded painting programs, the control system is in an automatic mode. The controller is in a data transfer mode, for example, when it is writing a stored program of instructions onto a cassette tape or reading a painting program from a cassette tape. The controller is in a program edit mode when a controller operator is using the controller console to modify programs already stored in memory.

When the controller is operating in each of these different modes, the functions which must be performed by the controller are often vastly different in the different modes. For example, during a work session, the controller may also interface with auxiliary inputs and outputs at the work robot work station. Such an auxiliary output may include, for example, a servo motor to turn a workpiece relative to the work robot so that different sides of the workpiece may be properly painted. An auxiliary input might be a limit switch to indicate the proper turning of the workpiece.

Often, a number of work robots with associated individual controllers perform a succession of operations on a single conveyor line of workpieces. It may be desired to monitor, during a work session, the operating status of the controllers in such a multi-robot configuration. Consequently, each robot controller may also produce status signals which are coupled to a remote location for indicating various status parameters for the controller. Such status parameters might include an indication that the controller is, in fact, in the automatic mode (a work session) or an indication that the work robot is currently spray painting a workpiece.

The performance of work session functions such as spray coating a workpiece or activating an auxiliary output device are generally not required during certain other modes of operation such as data transfer or program editing. Other functions may be performed very often in one mode of operation and only rarely in another mode of operation. As an example, a paint spraying robot in a particular plant setting may be painting a number of different types of workpieces moving along a single conveyor line. Upstream of the work station, a workpiece identification station produces an identification signal for each workpiece moving past the identification station. There may be several workpieces moving along the conveyor between the identification station and the work station, where the work robot will actually spray paint each workpiece.

The controller must store each workpiece identification signal produced at the workpiece identification station. Typically, these identification signals are stored in a queue. Subsequently, the controller retrieves the identification of a workpiece from the queue as the workpiece approaches the work station. The retrieval of the workpiece identification signal from the queue is performed on a first in, first out basis. The controller responds to the retrieval of each part identification signal by reading from memory and executing the proper paint spraying program for the identified workpiece.

If the controller is in an editing mode, rather than the automatic mode, typically the conveyor will not move workpieces into the work station during such editing. However, it is possible that the conveyor may be advanced so that a number of workpieces are moved past the workpiece identification station while the controller operator is editing a program. The workpiece identification signals which are produced during editing must be stored in the queue for use in a subsequent work session so that the controller will be able to recall the proper painting programs for each of the workpieces which have moved past the identification station. The rate at which the controller must check for part identification signals is relatively high during program execution in the automatic mode of operation. On the other hand, during editing, when only a few workpieces can be expected to move past the workpiece identification station, the rate at which the controller must check for workpiece identification signals is relatively low.

Typically, robot controllers are microprocessor-based, or computer-based, and the various control functions performed by the controller are executed in response to a computer program. Normally, the controller employs a single programmed computer or microprocessor which executes a single monolithic program. In its simplest form, a monolithic program comprises a single main program loop with many decision points in the loop. In utilizing such a program, the robot controller computer moves through the single loop of instructions to perform all of the functions of the controller. As necessary, in moving through the loop, the computer calls up various subroutines to perform certain of the functions, while executing other functions directly in the main loop.

The computer accommodates different operating modes of the robot controller, and different conditions within each mode of operation, by appropriate use of the decision points in the program loop. Each decision point may be formulated in terms of robot controller operational mode, control system conditions, or other factors. For example, the program may provide at a decision point for determining if (a) the controller is in an editing mode and one second has elapsed since the last time the computer checked for a workpiece identification signal or (b) if the controller is in the automatic mode and one tenth of a second has elapsed since the computer last checked for a workpiece identification signal. Based upon the results of the decisions at such decision points, the computer executes different subroutines or branches to different portions of the main control loop. For each additional mode of operation, additional loops and levels of complexity are introduced into the program.

In order to accommodate an additional mode of operation for the controller, each decision point in the program involving modes of operation must be changed in order to reflect the additional operational mode. In a monolithic program structure, many loops, branches and subroutines in the program are accessible to a number of other portions of the program. Each time one of these branches or subroutines is changed to reflect the modification of a controller function, the effect of this change on all parts of the program must be considered.

The number of functions performed by a robot controller can be relatively large. For example, a robot controller for a painting robot may communicate with a local keyboard and display, communicate with a remote keyboard and display, output status information to a remote location, record commands during a training session, output commands to a work robot during a work session, produce auxiliary output signals and read auxiliary input signals, transfer painting programs from mass memory to buffer memory, and monitor a workpiece conveyor. For such a large number of control functions, the number of branches and interconnections in a monolithic program becomes extremely great. Writing and modifying such a monolithic program are, therefore, extremely time consuming.

A somewhat separate consideration with regard to prior art robot controllers is the hardware allocation of the functions to be performed by the controller. It is theoretically possible for a single microprocessor or computer to perform all of the functions of the robot controller while interfacing directly with such external apparatus as the robot simulator, the work robot, a keyboard and display, and a workpiece conveyor. Normally, however, in order to reduce the number of hardware tasks for the robot controller computer, additional hardware circuitry is employed for performing part of the interface functions.

Thus, for example, some of the servo loop calculations for developing the error signals to drive the axes of the work robot can be produced using hardware circuitry coupled to the work robot actuators and transducers which receives the desired link position commands from the controller computer. As another example, operator input/output hardware circuitry can be used to interface between the display and keyboard in the controller console and the controller computer. This frees the controller computer from performing such functions as communicating directly with the keyboard.

In the past, microprocessor-based circuits have also been used to interface between a robot controller computer and outside devices. The microprocessor-based circuits serve as "slave" microprocessors which merely respond to requests from the controller computer to perform desired control functions. In effect, these microprocessor-based slave circuits merely replace conventional hardware circuits in the controller. For example, a slave microprocessor might perform the closed loop servo control functions for a robot controller in response to

the desired link position signals supplied by the controller computer.

Since the slave microprocessors are merely performing dedicated hardware functions, they do not relieve the controller computer of its higher level decision making and control functions. As the number of these higher level functions to be performed by the controller, and the number of modes of operation of the controller increase, the decision making burden on the single controller computer greatly increases. This burden can not be relieved by adding slave microprocessor circuits or additional hardware.

The primary hardware constraint on a computer used in a robot controller is the speed of operation of the computer, which must be sufficient to allow execution of all required functions at a sufficient rate in all modes of controller operation. Allocating certain designated tasks to peripheral hardware or slave microprocessors can reduce the number of functions to be performed by the main controller computer. The main computer can then perform its functions at an adequate rate, while the total controller system performs more functions than the computer by itself would be capable of executing with sufficient speed.

Consequently, with a single computer robot controller, wherein the computer executes a single monolithic program, there are hardware and software constraints on the expansion of the number of functions and operational modes of the controller. As the software is expanded for such a controller, greater and greater program complexity is encountered, and more and more programming expense is incurred. Increasing the programming power of the controller computer to implement the more complex software at an adequate rate requires the use of larger and more expensive computers, also resulting in greater cost.

It is, therefore, a general aim of the invention, for a control system for a work robot of the foregoing type, to provide a controller which may be expanded without substantially increasing programming complexity. It is a related aim of the invention to provide such a controller which may be readily increased in computing power.

These objectives have been accomplished in accordance with certain principles of the invention by providing a robot controller which includes two computers serving as bus masters coupled to a common bus. Both of the master computers are capable of initiating communications on the bus. The bus is, in turn, also coupled to other circuits in the controller. Each master computer performs a different portion of the functions of the robot controller substantially independently of the other. One of the circuits coupled to the bus is a buffer memory through which the two master computers communicate. The buffer memory includes a first memory location which is written to by the first master computer and read by the second master computer. The buffer memory also has a second memory location which is written to by the second master computer and read by the first master computer.

The other circuits coupled to the bus are microprocessor-based circuits for serving such functions as interfacing with a workpiece conveyor control and performing the closed loop servo control of the work robot axes. In addition to the hardware division of the computing power of the controller into two master computers, the software structure for each of the computers is in a modular form to permit concurrent processing. The software routines for the functions to be executed by each controller computer form a number of program software modules which operate independently of one another. As conditions arise in the operation of the controller which require the controller to execute functions, the program modules which must be executed in response to these conditions are activated by a scheduler routine for the computer. No single program loop is executed, but instead the independent, individual program modules are called and executed by the computer processor as required.

In the form of the invention disclosed herein, some of the program modules are designated process modules, containing a process, routine which are called by the processor, through the scheduler routine, as conditions warrant. Other modules are designated interface modules and contain interface routines which are called by the processor through one or more of the processes or through other interface modules.

Each process comprises a program loop which includes, at a point therein, a call to the scheduler routine to suspend operation of the process. In response to the call the execution of the process is suspended and the processor executes a scheduler suspend routine. In making the call to the scheduler, the process passes to the scheduler an indication of the conditions under which the process is to be redispatched in the future. The scheduler places these conditions in a process entry table and proceeds to determine which process should be executed next based upon present control system conditions.

In the present instance, the scheduler employs "round robin scheduling". In this type of scheduling, the scheduler routine moves sequentially through the processes, checking current conditions against the redispatch conditions for each process. When the set of current conditions includes one or more of the redispatch conditions for a process, that process is executed by the processor. In turn, interface routines in the interface modules called by each process are also executed. The scheduling method is non-preemptive and non-prioritized. All ready processes are run before one process runs twice. The scheduler does not set an order for process execution.

In accordance with another aspect of the invention, in the round robot scheduling routine, if the scheduler checks the entire sequence of processes for a redispatch condition, and none of the processes are executed, the final process in the sequence is executed. This final, or default, process is a diagnostic routine which may be used to check parts of the system each time it is executed.

In accordance with a still further aspect of the invention, each of the master computers may check for the continued operation of the other computer using a "watchdog" process. Each computer processor executes the watchdog process periodically to produce a watchdog signal which is placed in an appropriate memory location in the buffer memory. The other master computer checks for the watchdog signal periodically, and if the signal has not been produced within a designated time out interval, the second master computer recognizes the fault condition.

Other objects and advantages of the invention, and the manner of their implementation, will become apparent upon reading the following detailed description and upon reference to the drawings, in which:

Figure 1 is a perspective view, in schematic form, of a typical work-performing robot, or manipulator, showing the general relationship of the relatively massive robot links and their respectively associated actuators and position transducers;

Figure 2 is a perspective view, in schematic form, of a lightweight, hand-manipulable simulator robot, or training arm, showing the general relationship of the simulator links and associated position transducers;

Figure 3 is a circuit diagram in block format of a robot control system and associated simulator and work robot;

Figure 4 is a flow chart of an illustrative robot training sequence;

Figure 5 is a flow chart of an illustrative robot program execution sequence;

Figure 6 is an illustrative software system architecture diagram for a computer in the control system of Figure 3;

Figure 7 is a diagrammatic illustration of a process entry table for a computer in the control system of Figure 3;

Figure 8 is a diagrammatic illustration of a process initialization table for a computer in the control system of Figure 3;

Figure 9 is a flow chart of an illustrative scheduler initialization routine for a computer in the control system of Figure 3;

Figure 10 is a flow chart of an illustrative scheduler-suspend routine for a computer in the control system of Figure 3;

Figure 11 is a flow chart of a scheduler-signal routine for a computer in the control system of Figure 3;

Figure 12 is an illustrative software system architecture diagram of a group of software modules for a computer in the control system of Figure 3;

Figure 13 is a flow chart of an illustrative part identification software process module;

Figure 14 is a flow chart of an illustrative portion of a sequence software process module;

Figure 15 is a flow chart of an illustrative portion of a queue software interface module;

Figure 16 is a flow chart of a second illustrative portion of a queue software interface module;

Figure 17 is a flow chart of an illustrative computer watchdog process module; and

Figure 18 is an illustrative software system architecture diagram of a portion of the system architecture of Figure 6.

While the invention is susceptible to various modifications and alternative forms, a specific embodiment thereof has been shown by way of example in the drawings an will herein be described in detail. It should be understood, however, that it is not intended to limit the invention to the particular form disclosed, but, on the contrary, the intention is to cover all modifications, equivalents, and alternatives falling within the spirit and scope of the invention as defined by the appended claims.

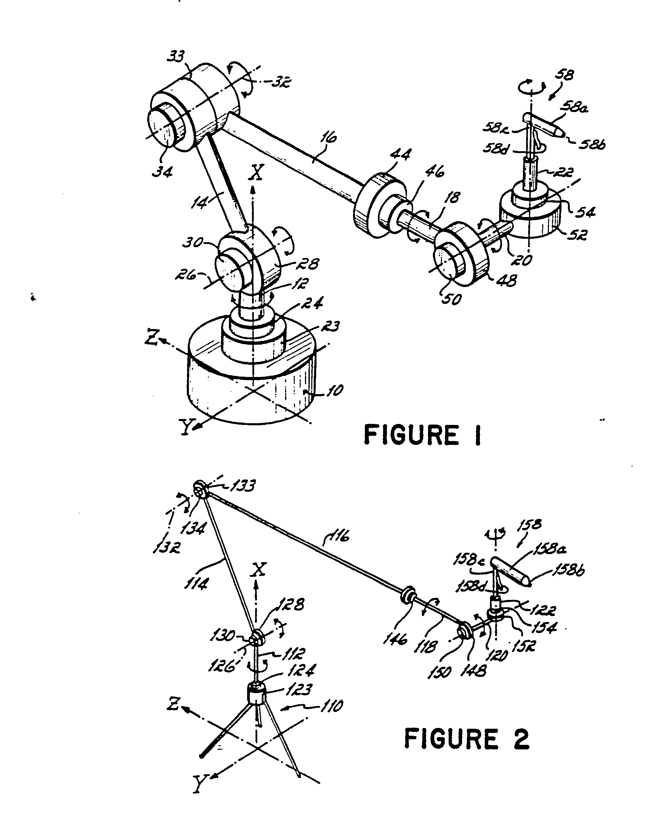

The invention shall be described herein with relation to a control system for storing a sequence of link position commands and gun commands, in the format of a sequence of instructions for a work-performing robot for spray painting a workpiece. With reference to Figure 1, a typical work-performing robot, or manipulator, includes a base 10 which rests on the floor or upon a movable table (not shown) which may be indexed to a number of positions. Extending from the base 10 are plural, series-connected, elongated, articulated members or links 12, 14, 16, 18, 20 and 22 which, in the preferred embodiment, provide the robot with several, in this instance six, degrees of freedom. In practice, the links 12, 14, 16, 18, 20 and 22 collectively constitute a relatively large mass. For example, the links 12, 14, and 16 are each approximately 1-4 feet in length, and typically weigh in the range of 10-400 pounds each. The links 18, 20 and 22 which, in the work-performing robot shown in Fig. 1 constitute a wrist, typically are significantly less massive than the links 12, 14 and 16, although this is not necessarily the case.

The link 12 is vertically disposed and mounted to the base 10 by a suitable joint which permits the link to rotate about its longitudinal axis, which is coincident with the X axis. An actuator 23 is associated with the link 12, and is responsive to a position error signal provided by a conventional robot controller (not shown in Fig. 1) to facilitate selective, bidirectional angular motion of the link 12 in an azimuthal direction about its longitudinal axis to the desired link position. Also associated with the link 12 is a position transducer, or resolver, 24 which provides an electrical signal correlated to the actual angular, or azimuthal, position of the link 12 relative to the base 10.

The link 14 at its lower end is connected to the upper end of the link 12 by a suitable joint for permitting pivotal, elevational movement of the link 14 in a vertical plane about a horizontal axis 26 which is perpendicular to the X axis and parallel to the Y-Z plane. Associated with the link 14 is an actuator 28 which is responsive to a position error signal from the robot controller and facilitates selective, bidirectional, elevational, pivotal movement of the link 14 about horizontal axis 26 to the desired link position. Also associated with link 14 is a position transducer 30 which provides an electrical signal correlated to the actual elevational position of the link 14 relative to the link 12.

In like manner, the links 16, 18, 20 and 22 are interconnected by suitable joints and have associated actuators 33, 44, 48 and 52, respectively. Each of the link actuators is responsive to a position error signal from the robot controller to facilitate movement of each of the links to the desired link position. Also associated with each of the links 16, 18, 20 and 22 is a position transducer 34, 46, 50 and 54, respectively. Each of these position transducers provides an electrical signal correlated to the actual position of its associated link. The articulated links 18, 20 and 22 collectively constitute a wrist.

The link 22 constitutes the mechanical output element of the work-performing robot. While the mechanical output of the robot can be utilized for positioning a wide variety of devices, in the illustrated form of the invention the work-performing robot is utilized to position a spray coating gun 58 having a barrel 58a with a nozzle 58b which emits coating particles. The gun handle 58c is mounted to the upper end of the wrist link 22. The gun handle 58c mounts a suitable trigger mechanism 58d which, when actuated by a suitable signal-operated device (not shown), functions to operate a valve to control the emission of coating particles from the nozzle 58b of the spray gun 58.

The longitudinal rotational axes of the wrist links 18, 20 and 22 are mutually perpendicular, and accordingly constitute three degrees of freedom for the robot. These three degrees of freedom, coupled with the three degrees of freedom of the links 12, 14 and 16, provide a total of six degrees of freedom for the work-performing robot.

In the operation of the work-performing robot shown in Fig. 1, a series of programmed, i.e., desired, link position command signals stored in the form of instructions in a robot program mass memory device of the robot controller are periodically retrieved and compared against the actual link position signals provided by the link position transducers 24, 30, 34, 46, 50 and 54, and in response thereto link positional error signals are generated for each of the links 12, 14, 16, 18, 20 and 22. The positional error signals for the various links 12, 14, 16, 18, 20 and 22 are then input to the various link actuators, 23, 28, 33, 44, 48 adn 52, which typically are of the servo-controlled electrohydraulic type, for moving the links to the desired, or programmed, command positions which in turn reduce the positional error signals to zero. Thus, the links of the work-performing robot of Fig. 1 are driven through the programmed sequence of desired motions, or command positions, utilizing closed-loop servo techniques, by periodically comparing desired position command signals retrieved from the memory of the robot controller with actual link position signals from their associated position transducers, and using the resulting positional error signals associated with the different links to drive the various link actuators to the desired, or programmed, command positions.

During the operation of the work-performing robot, gun commands, interleaved at proper points in the sequence of link position commands, are coupled to the spray trigger control of the gun 58. In response to these gun commands, the paint flow valve in the gun is operated in timed relation to the gun position established by the link position commands.

Since robot actuators, position transducers, closed-loop servo controls, and the like for the work-performing robot of Fig. 1 are well known and form no part of this invention, they are not further discussed in detail herein, except to the extent necessary to an understanding of the invention as disclosed herein.

The robot simulator, or training arm, shown in Fig. 2, which is useful in preparing a programmed sequence of motions for input to the work robot for execution thereby relative to a workpiece, includes a tripod base 110 from which extends vertically a link 112 which is connected to the base for rotational movement about a vertical axis by a rotary joint 123. A position transducer 124 associated with the link 112 and base 110 provides an electrical signal correlated to the actual angular position of the link 112 relative to the stationary base. Pivotally connected to the upper end of the link 112 by a rotary joint 128 is a link 114 which pivots about axis 126. An angular position transducer 130 associated with the joint 128 and the link 114 provides an electrical signal correlated to the actual angular position of the link 114 with respect to the link 112. A link 116 connects to the link 114 via a rotary joint 133 for pivotal movement about axis 132. An angular position transducer 134 associated with the joint 133 and the link 116 provides an electrical signal correlated to the actual angular position of the link 116 with respect to the link 114.

Also included in the robot simulator depicted in Fig. 2 are links 118, 120 and 122 which are pivotally connected to links 116, 118 and 120, respectively, via rotary joints 144, 148 and 152, respectively. Angular position transducers 146, 150 and 154 associated with the rotary joints 144, 148 and 152, respectively, and the links 118, 120 and 122, respectively, provide electrical signals correlated to the actual angular position of the links 118, 120 and 122 with respect to the links 116, 118 and 120, respectively.

The length of the links 112, 114, 116, 118, 120 and 122 of the simulator robot of Fig. 2 are identical to the lengths of the links 12, 14, 16, 18, 20 and 22, respectively, of the work-performing robot shown in Fig. 1. Of course, the mass of the links 112, 114, 116, 118, 120 and 122 of the simulator robot of Fig. 2 are a mere fraction of that of their counterpart links 12, 14, 16, 18, 20 and 22 of the considerably more massive work-performing robot shown in Fig. 1. Similarly, the joints 123, 128, 133, 144, 148 and 152 of the simulator robot permit the same type of pivotal motion between their respectively associated links 112, 114, 116, 118, 120 and 122 as their counterpart rotary actuators 23, 28, 33, 44, 48 and 52 provide for their respectively associated links 12, 14, 16, 18, 20 and 22 of the work-performing robot.

The articulated links 118, 120 and 122 collectively constitute a wrist, and the link 122 constitutes the mechanical output element of the simulator robot. In correspondence with the work robot of Figure 1, the mechanical output of the simulator comprises a spray coating gun 158 having a barrel 158a with a nozzle 158b which emits coating particles. The gun handle 158c is mounted to the upper end of the wrist link 122. The gun handle 158c mounts a suitable trigger mechanism 158d which, when actuated by the operator of the simulator, functions to control the emission of coating particles from the nozzle 158b of the spray gun 158.

When the spray gun 158 is moved manually, by an operator grasping the handle 158c thereof, through a sequence of motions necessary to spray coat an object, which is possible due to the lightweight construction of the simulator, the various links 112, 114, 116, 118, 120 and 122 of the simulator robot move through a sequence of motions. Simultaneously, the transducers 124, 130, 134, 146, 150 and 154 of the simulator robot associated wiht the various simulator robot links 112, 114, 116, 118, 120 and 122 provide electrical outputs corresponding to the actual sequence of positions, or motions, through which the simulator robot links move in the course of manually moving the gun through the positions necessary to coat the object. These transducer signals corresponding to the actual positions of the different simulator robot links can be input directly to the robot controller or recorded by any suitable means (not shown).

The spray gun 158 on the simulator contains the same elements and controls 158a-158d as the corresponding elements 58a-58d of the gun 58 utilized by the work robot. In the course of moving the gun 158 through the sequence of motions necessary to spray paint a workpiece, the operator of the simulator periodically manually actuates the trigger 158d to permit paint to be discharged from the gun nozzle 158b.

By recording signals corresponding to the position of the switch 158d in conjunction with recording the position signals provided by the actual position transducers 124, 130, 134, 146, 150 and 154 of the simulator robot for the entire sequence of motions of the simulator robot links 112, 114, 116, 118, 120 and 122 produced by manual manipulation by the operator of the gun 158, a sequence of coordinated gun switch command signals and desired robot link position signals can be stored.

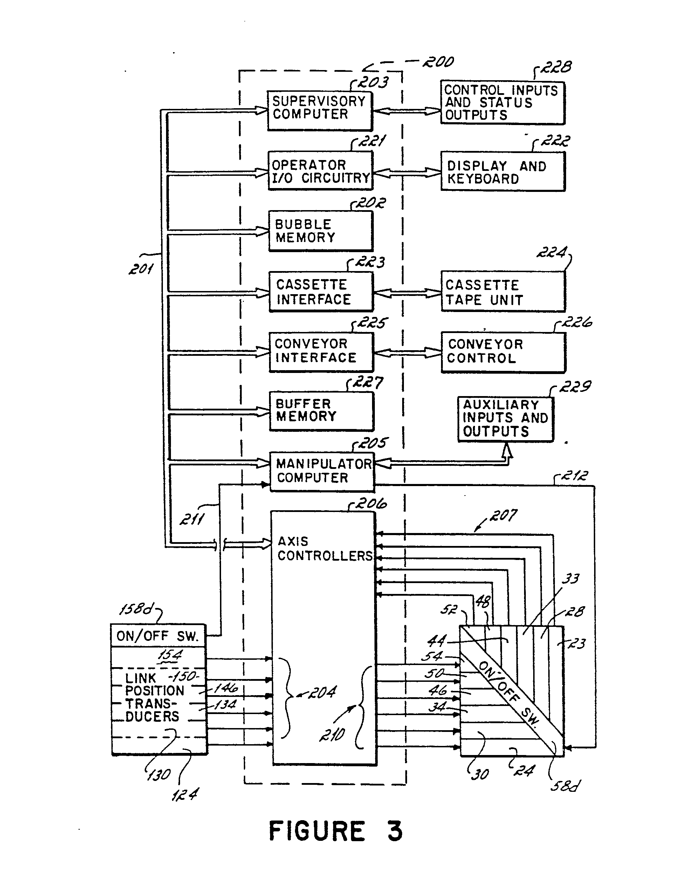

These stored signals (link position commands interleaved with gun commands) are maintained within the robot controller, as a painting program, in a bubble memory 202 (Fig. 3). Thereafter, when it is desired to operate the work robot under the control of the stored program, the recorded link position commands input to the robot controller for use by the work-performing robot are sequentially retrieved and compared with signals correlated to the actual work robot link positions; and link position error signals are derived for input to the work robot link actuators to cause the work robot links to reproduce the motion of the simulator robot links in the manner previously described. In addition, gun commands interleaved with the link position commands are retrieved, and the gun switches are activated in the appropriate timed relationship to the motion of the robot links to effect spray painting of the workpiece.

Associated with the simulator robot and work robot of an illustrative robot system with which this invention is useful is a robot controller 200, which comprises a number of circuits which communicate on a common bus 201. The controller 200 includes a bubble memory 202 which serves as a robot program memory for storing painting programs of command sequences for driving the various work robot links 12, 14, 16, 18, 20 and 22. The control functions of the robot controller 200 are performed by two master computers, a supervisory computer 203 and a manipulator computer 205. These computers cooperate during a training session with an axis controller circuit 206 to record painting programs in the bubble memory 202. The two master computers 203 and 205 also cooperate during a work session to couple a selected workpiece painting program from the bubble memory 202 to the axis controller circuit 206.

The desired work robot link position commands, which are coupled to the axis controller circuit 206, are compared with actual work robot link positions from work robot position transducers 23, 28, 33, 44, 48 and 52 on lines 207. In response to these comparisons, work robot link position error signals are derived by the axis controller circuit 206 for input to the link actuators 24, 30, 34, 46, 50 and 54 on lines 210. During program generation, in a training session; signals correlated to the desired work robot link positions from simulator robot transducers 124, 130, 134, 146, 150 and 154 are input to the robot controller circuit 206 on lines 204. Also stored in the robot controller bubble memory 202 as part of each painting program are gun commands interleaved with the sequence of link position commands. The gun commands comprise commands for effecting the desired condition of the ON/OFF switch 58d of the work robot. These ON/OFF switch condition signals are input during program generation to the manipulator computer 205 on line 211, and are output during program execution to the ON/OFF switch 58d of the work robot on line 212.

During a training session, the link position transducer signals coupled to the axis controller circuit 206 on the line 204 are converted to digital signals and sampled at a particular rate. The digital link position signals are then coupled from the axis controller circuit 206 to the manipulato: computer 205. In addition, the ON/OFF switch 158d conditions are coupled directly to the manipulator computer 205 on the line 211. The manipulator computer formats the commands into instructions containing groups of link position commands and gun commands. A complete series of these instructions from a training session make up a painting program. The program of instructions produced during a training session is written to the bubble memory 202 to be stored and subsequently executed b: the work robot.

In the illustrated control system 200, link position commands and gun commands are stored in the bubble memory 202 in the form of instructions. Six link position commands, one for each of the robot links, and a gun command comprise one group of commands. Eight groups of commands comprise an instruction. The instructions are stored in the bubble memory in blocks, with a number of blocks of instructions making up a complete painting program. Typically, the bubble memory 202 contains a number of separately identified, different painting programs to be used in driving the work robot to paint different types of workpieces.

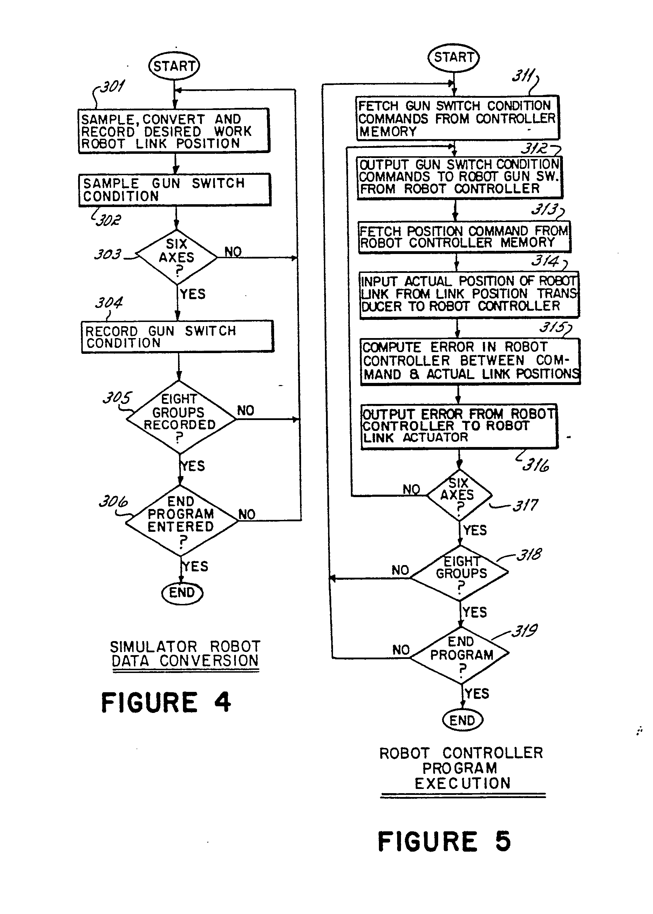

Viewing the controller 200 as a whole, without regard to the particular circuits therein, Figure 4 illustrates the routine for recording a program during a training session. During a training session, the controller samples, converts and records a first desired work robot link position (301) from one of the link position transducer lines 204. The controller then samples the gun switch condition (302) on the line 211. After the recording of link position commands for each of the six links of the simulator robot (303), the gun switch condition is recorded (304), together with an indication of the point during axis command recording that the gun changed condition, if it has changed condition. The controller then determines if eight groups of commands have been recorded (305), and once eight groups of commands have been recorded, forming an instruction, checks to determine if the simulator operator has signaled the end of the training session (306). The controller continues to record instructions until the end of the training session has been signaled by the operator.

Figure 5 is a flow chart of the controller routine for a work session during which the work robot is driven under program control. In the illustrated flow chart the operation of the controller as a whole is considered, without regard to the individual circuits therein. The controller first fetches gun switch condition commands from the controller memory (311), which are in turn transferred to the robot ON/OFF switch for controlling the application of paint (312). The timing of the application of a gun command to the gun switch is correlated to the recorded indication of the point during axis command recording that the gun switch condition changed. The controller then fetches the first link position command in the first group of commands in the instruction (313). The actual position of the work robot link in question is input via its respective line 207 to the robot controller (314), and the desired and actual work robot link positions are then compared and a work robot link position error for that particular link is computed by the robot controller (315). The work robot link position error signal is output via its respective line 210 to its respective work robot link actuator (316). The foregoing link positioning steps are repeated for each desired work robot link position signal, in this case six (317). The steps for processing a group of signals are repeated for the number of groups in a single instruction, in the present case eight groups of signals (318). After eight groups of signals have been executed, the controller determines if the end of the program has been reached (319), and if so, the paint spraying program is concluded and the work session ends. If the end of the program has not been reached, the controller continues to execute instructions to drive the work robot.

In the implementation of a work session by the controller 200, the blocks of instructions in the painting program executed by the work robot are transferred, on a block by block basis, from the bubble memory 202 to a buffer memory 227 on the controller bus 201. Axis commands, on a command by command basis, are coupled from the buffer memory 227 on the bus 201 to the axis controller circuit 206. The axis controller circuit utilizes the link position commands for the closed loop servo control of the work robot as earlier described. If the controller operates in synchronism with a workpiece conveyor moving workpieces past the work robot work station, the rate at which link position commands are coupled to the axis controller circuit 206 is synchronized with the conveyor movement. The axis controller circuit 206 typically executes the servo control loop at a higher rate than the rate at which the position commands are supplied to the axis controller circuit 206.

During a training session, the axis controller circuit 206 samples the link position transducers to produce a sequence of link position commands which are coupled to the buffer memory 227 on the bus 201, in a command by command fashion to form instructions stored in the buffer memory. As blocks of instructions are accumulated in the buffer memory 227, they are transferred to the bubble memory 202 for storage as a painting program prepared during the training session.

Interleaved with the axis position commands coupled from the axis controller circuit 206 during training, are gun switch commands from the gun switch 158d, which are coupled directly to the manipulator computer 205 in the controller. In like fashion, interleaved with the link position commands issued to the axis controller circuit 206 during a work session, are gun commands which are coupled to the work robot gun switch 58d from the manipulator computer 205. The gun commands are maintained in proper timed relationship to the link position commands by the manipulator computer.

During training and work sessions, the supervisory computer 203 and the manipulator computer 205 cooperate with the bubble memory 202 to record and to recall for execution paint spraying programs. The closed-loop servo control for the work robot and the sampling and converting of simulator robot link positions are performed by the axis control circuit 206.

memory. A conveyor interface circuit 225 interfaces between conveyor control elements and the bus 201. The conveyor control elements, shown collectively as 226, include for example, a conveyor encoder having an output in the form of a pulse train indicative of conveyor position which is used to synchronize the writing of link position commands to the axis control circuit 206 with the workpiece movement on the conveyor. The controller 200 further includes the buffer memory circuit 227, which provides intermediate storage locations for program instructions transferred to and from the bubble memory during training and work sessions. The buffer memory also provides means for communication between the supervisory computer 203 and the manipulator computer 205, as shall be discussed in more detail hereinafter.

In the present form of the invention, the supervisory computer 203 and the manipulator computer 205 are each single board computers, specifically Type iSBC88/25 single board computers manufactured by Intel Corporation of Santa Clara, California. The operator input/output circuitry 221 is based upon Intel i8279 keyboard control integrated circuits and Intel i8212 input/output control integrated circuits. The bubble memory 202 is an Intel iSBC254 mass memory system, and the buffer memory 227 is a RAM/ROM memory such as a Type 4602 integrated circuit manufactured by Monolithic Systems. The axis controller circuit 206 includes two axis controllers (one controller per three axes), each axis controller being based upon an Intel i8741A microprocessor. The same microprocessor forms the basis for the cassette interface circuit and the conveyor interface circuit.

Each of the circuits in the controller 200 communicate on the common bus 201. In the present instance, the bus is an IEEE standard 796 bus, in accordance with the Intel Multibus (TM) Specification. Both the supervisory computer 203 and the manipulator computer 205 are master computers which can initiate communications on the bus 201. The master computers are designated "bus masters". The bubble memory circuit 202 can also function as a bus master. The bus includes address lines, data lines, and control lines. Included among the control lines are a read line and a write line, which are used by the bus masters in conjunction with the address lines to initiate a read or a write from or to a particular address location accessible to the bus 201. The other microprocessor based circuits in the controller 200 are "slave" microprocessors, or "bus slaves", and respond to the bus masters, when addressed, by either writing data onto the data lines of the bus or reading data from the data lines of the bus.

The bus priority in the present instance is (1) the bubble memory, (2) the manipulator computer, and (3) the supervisory computer. Conflicts in access to the bus 201 are resolved with hardware in accordance with bus priority protocols of the bus specification.

In addition to communicating with the bus 201, the supervisory computer communicates with control inputs and status outputs 228. For example, the status, or mode of operation, of the controller 200 can be supplied to a remote location which is monitoring the status of one or more robot controllers 200. The manipulator computer 205 also communicates with auxiliary inputs and outputs 229, typically located at the work robot work station. For example, the manipulator computer can issue control commands to a servo motor to rotate a workpiece being spray painted or to activate an exhaust fan at the work station.

In the hardware implementation of the controller 200, the provision of a supervisory master computer and a manipulator master computer to divide the control functions of the robot controller accords with one aspect of the invention. The particular hardware implementation of the controller circuits themselves is not critical. For example, the cassette interface circuit 223 and the conveyor interface circuit 225 might

be combined into a single circuit. Or, one of the microprocessor-based circuits might be replaced by discrete logic circuitry. In addition, the control functions of the controller 200 could be implemented by one or more additional master computers communicating on the bus 201 through the use of conventional bus priority techniques dependent upon the number of bus masters in the system. Consequently, the particular hardware implementations of the controller 200 shall not be discussed further herein except to the extent necessary for an understanding of the various aspects of the present invention.

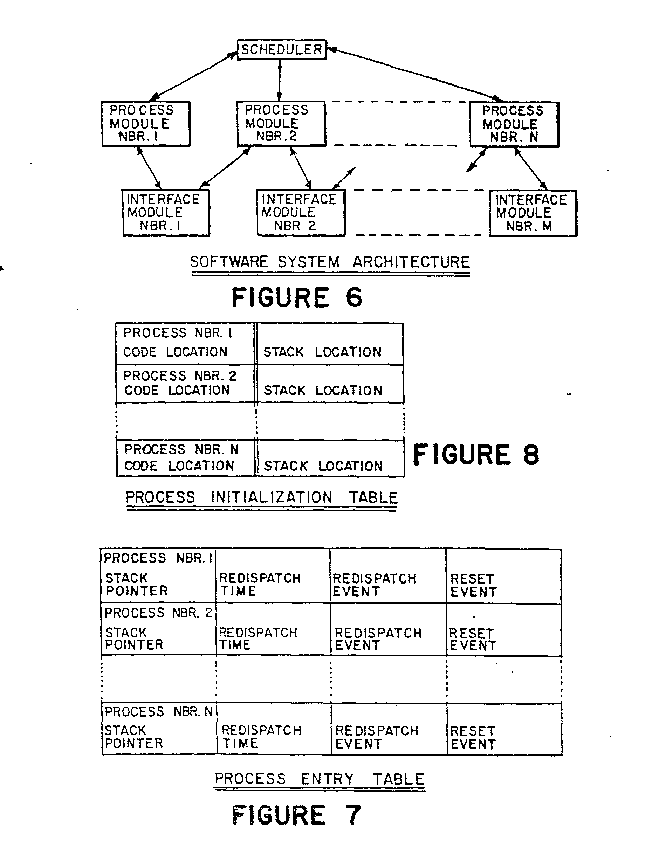

In accordance with a further aspect of the invention, the software architecture employed for each of the master computers includes a number of independent program modules, as illustrated in Figure 6. This software architecture is employed in each of the two master computers, the supervisory computer 203 and the manipulator computer 205, but the illustrated software architecture may find advantageous use with any number of master computers forming a robot controller, including a single master computer.

A software module may be viewed as a collection of routines, or procedures, that operate on a set of data to perform a specific function. As implemented in the present controller, a typical software module includes a number of routines for implementing different aspects of a single controller function. A program module may contain a process routine, which as shall be described hereinafter is executed in response to conditions in the system calling for that process routine. Other routines in the program modules are designated interface routines, which may be called for execution by process routines or other interface routines. A single program module may contain both process and interface routines, and any module which contains a process is designated a process module whether or not there are also interface routines in the module.

A program module typically also includes an initialization routine which is executed when the controller is first energized. A program module may also include an interrupt routine. Interrupts shall be discussed subsequently. The common element for each program module is that each of the routines of the module operate upon a common set of data which is generally not available to any of the other software modules.

In the illustrated software system architecture, the processor in each master computer utilizes a scheduler-suspend routine to call processes in a group of process modules Nos. 1 through N, and the processor then executes the called process. A number of interface software modules, designated Nos. 1 through M, contain routines which are not called directly by the scheduler, but are employed by the processes to perform different functions. Process modules may also contain interface routines which cannot be directly called by the scheduler. Routines in an interface module may be called by more than one process, and interface routines may be called by other interface routines.

The scheduler is a "round robin scheduler", moving sequentially through the processes from process No. 1 through process No. N and returning to process module No. 1 to move through the sequence again. Not every process is selected by the scheduler for execution. Instead, each process at any given time has an associated condition or conditions which, if they are true, will result in the process being executed. Each process is a program loop which may contain a number of branches. At one or more program steps in the process, there are "suspend calls" which call the scheduler-suspend routine to suspend the execution of the process.

When a process is suspended, there are associated redispatch conditions which must be met in order to again execute, or redispatch, the process. The processor retains the identification of these conditions for each process in a table in the computer memory. The current control system conditions are then compared with the redispatch conditions for each process during the round robin scheduling performed by the scheduler.

The redispatch conditions for a particular process can change each time the process is executed. As the scheduler checks each process, if the current system conditions do not match any of the current redispatch conditions for the process, that process is not executed.

In order to properly redispatch each process selected by the scheduler, the computer includes in memory a process entry table, as illustrated in Figure 7. This table is a dynamic table, stored in the computer RAM. The process entry table includes four items of information for each process.

Before describing the elements of the process entry table, a brief description of a part of the operation of the microprocessor in the master computer is necessary. When the processor executes a monolithic program, the program is stored in computer memory, and the processor advances through the steps of the program by reading the steps from computer memory locations and executing the program steps contained therein. Typically, there is associated with a program a certain range of memory locations in which the program is stored. In executing a monolithic program, the processor also maintains a "stack", which is a last in, first out storage location for information developed in the course of execution of the program. The current address location of the top of the stack is maintained in a register and is referred to as the "stack pointer". In a monolithic program, there are a code location (memory address for the program code) and a stack pointer (which identifies the location of the top of the program stack) to define the state of execution of the program.

In the present system, the processor concurrently executes a number N of processes in separate process modules which are independent from one another. Therefore, a code location must be maintained for each of the processes so that the program steps, or code, can be located in the computer memory when the process is to be executed. Also, each of the processes has its own associated stack, and therefore each process stack is at a different computer memory address. Consequently, a stack pointer must be maintained for each process to identify the location of the top of the stack for that process each time the process is executed.

The contents of the process entry table shall now be described in light of the foregoing discussion. The first element of the process entry table for each process is the stack pointer for that process. When the process is redispatched by the scheduler-suspend routine, the processor obtains the stack pointer from the process entry table. The stack pointer contains the address for the top of the stack, and in the stack for the process is the address of the process step (the code location) at which the process is to begin execution upon being redispatched. The remaining elements in the process entry table are concerned with identifying the system conditions which must be met for redispatching the process.

In the present instance, two types of conditions can result in the redispatch of a process. Each of these two types of conditions are reflected as separate entries in the process entry table. First, a redispatch time may be entered for a process. The scheduler, in checking each process, compares the redispatch time in the process entry table to the current time maintained in an internal clock in the computer. If the current time exceeds the redispatch time, then the process is redispatched. If the process does not have a time-related redispatch condition, the redispatch time in the process entry table is zero.

The second type of redispatch condition is a redispatch event. In the present form, the redispatch event entry in the process entry table for each process is a 16-bit word. Each of the 16 bits corresponds to a different system condition. Each of the two computers in the present system has its own event word so that up to 32 events may be signaled in the system. Such conditions may be, for example, the presence of a workpiece at the work robot work station or the depression of a key on the controller console keyboard. For each process, the scheduler compares the redispatch event word with a system event word which is stored in a system event memory location of the computer. If any of the current events in the event memory location match a redispatch event for that process, the process is executed.

The fourth item of information in the process entry table for each process is a reset event word. The reset event word is representative of redispatch events generated during the execution of a process, and the reset event word is used to clear redispatch events from the system event word periodically. In general, the scheduler adds new event indications to the system event word after each process is executed. The new events remain in the system event word until the scheduler has sequenced through all of the processes one time so that each process has an opportunity to respond to a new system event. The use of the reset event word shall be described more fully hereinafter in conjunction with an illustrative flow chart of the scheduler operation.

In order to set up the process entry table each time the computer is activated, a process initialization table as shown in Figure 8 is stored as a static table in the computer ROM. This table contains two items of information for each process. First, a code location is stored. The code location is the computer memory address for the beginning of the code, or program steps, for the process. The second item of information is a stack location for the process.

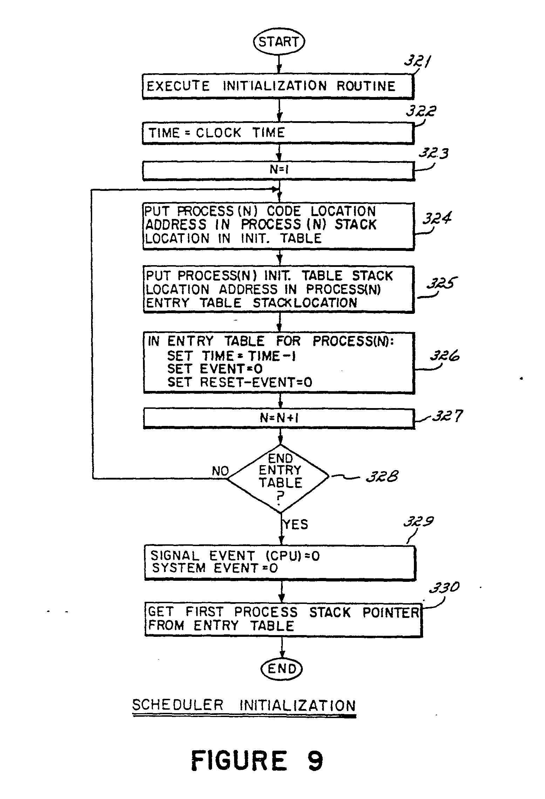

The initialization of the program modules and the scheduler, including the establishment of the process entry table, are illustrated in the flow chart of Figure 9. Upon activation of the computer, a number of initialization routines are executed (321). The requisite instructions for executing the initialization are stored in an initialization table in the computer ROM. The computer microprocessor then sets a variable, "time", equal to the present clock time (322), which is obtained from an internal clock of the computer. The processor then sets a variable "N" equal to one (323).

The processor puts the process (N) code location address in the process (N) stack location as obtained from the initialization table (324). The processor then puts the process (N) stack location address from the initialization table in the process (N) entry table stack pointer location (325). In this way, the first time each process is executed, the process begins at the code location address stored in the process initialization table. Subsequently, as shall be described hereinafter, each time a process is suspended, the stack pointer for that process is stored in the process entry table. Upon later redispatch of the process, the processor obtains the stack pointer location for the process from the process entry table and gets the code location at which to begin executing the process from the stack.

Then, in the next step (326), the computer, for the process (N), sets the redispatch time equal to a value lower than the time variable, which has been set equal to clock time.

This entry in the table will ensure that each process is executed during the first pass through the process modules by the scheduler, since the current time will exceed the redispatch time stored in the table for each process. The processor in this step (326) also sets the redispatch event and reset event words equal to zero.

The processor increments N (327) and determines if it is at the end of the process entry table (328). If not, the processor repeats the steps 324-327. If the processor is at the end of the process entry table, it sets a signal event word and the system event word (for its computer) equal to zero (329). As shall be discussed more fully hereinafter, the system event word is a 16-bit word, stored in a RAM memory location in the computer, which is generally indicative of all redispatch events which have occurred since the last time a process, which is now being checked by the scheduler, was last checked. The signal event word for a computer is substantially equal to all events signaled by either computer during the execution of a process which has just been executed. In the present system, there are two signal event words, one for each master computer. The two signal event words are stored in the buffer memory 227. Each computer can write signal events to either signal event word in the buffer memory. The signal event word associated with a particular computer, however, can only be reset by that computer. When writing a signal event to the signal event word, the signaled event must therefore include a designation of one of the computers in order to be fully defined.

After setting the signal event and system event words to zero, the processor then gets the first process stack pointer from the process entry table (330). In the implementation of this step, the stack location from the stack pointer entry in the process entry table is placed in the computer stack pointer register, and the computer is enabled to execute the first process.

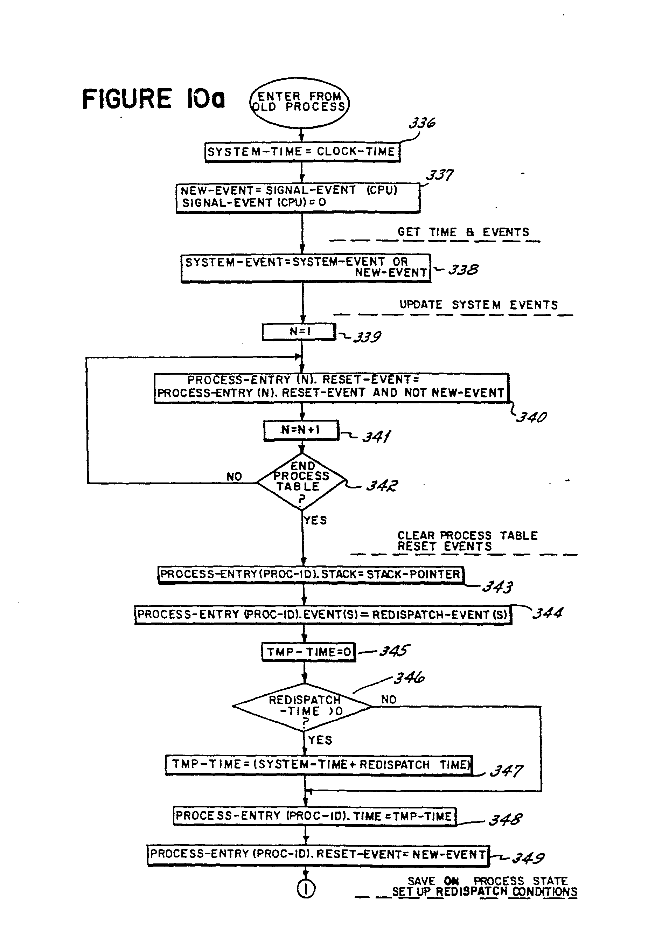

In the course of executing each process, a call to a scheduler-suspend routine is made by the process. At this point in the execution of the process, the process is suspended, and the scheduler-suspend routine is executed. The scheduler-suspend routine updates the system events word to include the events signaled during the just-suspended process, and determines which process is to be dispatched next. The scheduler-suspend routine is illustrated in the flow chart of Figure 10.

When there is a suspend call from a process, the computer enters the scheduler-suspend routine from the old process. When a process suspends and calls the scheduler-suspend routine, there are carried over to the scheduler-suspend routine the stack location to which the process is to be redispatched and the redispatch conditions for the process (time and events). These items of information are obtained from the stack of the suspended process.

Upon entering the scheduler-suspend routine, the processor sets a variable, "system-time", equal to the current clock time (336). Then a word, "new-event", is set equal to the signal event word for the subject computer. This signal event word contains an indication of the events signaled during the execution of the old process which has just been suspended. The signal event word may also include events signaled from the other computer. The processor then sets the signal event word for the subject computer equal to zero (337).

The processor logically OR's the new event word with the system event word (338). This updates the system event word to include the events signaled during the process which has just been suspended. The processor then sets a variable "N" equal to one (339) and loops through the steps 340-342 to modify the process entry table reset event word for each process in the table.

As shall be seen, the reset event word is used to remove events from the system event word. This is done after each process has had an opportunity to "see" an event signaled by a process. For example, if process No. 4 signals event No.

1 (of the 16 events) and there are eight processes (N equals 8), this signaled event must be checked against the redispatch event word for processes 5-8 and 1-4. After the scheduler has compared event No. 1 with the redispatch event word of each of the processes, including process No. 4 which signaled the event, the event is removed from the system event word.

The reason for the loop of steps 340-342 is to ensure that if the same event, such as event No. 1 for example, is signaled again by a subsequent process, that event will not be reset by the first process to signal the event. In the example, if, after process No. 4 signals event No. 1, process No. 8 also signals event No. 1, processes 1-8 must be given an opportunity to "see" the signaled event No. 1. Therefore, means must be provided to prevent the event No. 1 from being reset after the scheduler reaches process No. 4, which had originally signaled event No. 1. In other words, each time an event is signaled, each process in sequence including the signaling process must have an opportunity to "see" the signaled event, regardless of prior signaling of the same event.

In the loop of steps 340-342, the computer modifies the reset event for each process by performing the logical function AND NOT between each reset event word and the new event word (indicative of events just signaled by the old process). By this operation, any event in a process reset event word which corresponds to a new event is removed from the reset event word.

After clearing the process entry table reset event words as described, the processor places the current stack pointer into the stack pointer location in the process entry table for the old process. When this process is subsequently redispatched, the processor will be directed by the process entry table stack pointer entry to the stack for the process, which in turn contains the code location at which to begin execution of the process.

The processor next sets the redispatch event word for the old process in the process entry table to reflect the redispatch events carried over from the old process into the scheduler-suspend routine (344). The processor sets a variable, "temporary time", equal to zero (345). The processor then checks the redispatch time carried over from the old process (346). If the redispatch time is greater than zero, indicating that there is a redispatch time condition for the process, the processor sets "temporary time" equal to the system time established above (in the step 336) plus the interval of redispatch time carried over from the old process (347). If the redispatch time is not greater than zero, then the step 347 is bypassed and "temporary time" remains equal to zero. The processor enters the value of "temporary time" as the redispatch time for the process in the process entry table (348). Finally, the processor places the new event word (indicative of events signaled during execution of the old process) as the reset event entry in the process entry table for the old process (349). In the steps 343-349, the processor has, therefore, saved the old process state and set up the redispatch conditions for the process, by writing the necessary entries in the process entry table for the old process.

The processor next sets the state of a variable, "diagnostic", equal to a false condition (351), beginning the portion of the scheduler-suspend routine which determines the next process to be dispatched. The processor then sets a variable, "time-up", to a false condition and a word, "return-event", equal to zero (352). The processor increments the process identification from the old process identification to the next process in the sequence (353) and determines if it has reached the end of the process entry table (354). If the processor has not reached the end of the process entry table, it proceeds to check the redispatch conditions for the new process. If the processor has reached the end of the process entry table, it checks to determine if the variable "diagnostic" is in a true condition (355).

In the present sequence of processes, the last process is a diagnostic routine for checking the operation of the computer or other parts of the controller. For example, the diagnostic routine can check for proper functioning of the computer memory. In the preferred form of operation of the scheduler, the diagnostic process is executed any time the scheduler has advanced through the entire process entry table without executing any other process. In this way, rather than entering an idle mode or merely looping through the processes in the sequence, the processor can perform a diagnostic function.

The purpose of the loop comprising the steps 354 and 355 is to determine if the processor has advanced through the entire sequence of processes without executing a process. Each time a process suspends, the processor proceeds through the step 351 setting the "diagnostic" variable to a false condition. Therefore, the first time the diagnostic routine is encountered at the end of the process table, the diagnostic variable will not be true. If it is not true, the scheduler returns to the first process and sets the diagnostic variable to a true condition (356).

As shall be seen, if a new process is not executed, the processor returns to the step 352 and re-executes the loop. Therefore, if the processor completes the loop for all processes in the table, and returns to the diagnostic process, the diagnostic variable will then be in a true condition from having been set in the step 356. If, on the other hand, before the processor has advanced through the entire sequence of processes, a process is executed, the step 351 is encountered, resetting the "diagnostic" variable to a false condition, before the step 355 is executed.

Returning to the step 355, if the diagnostic variable is in a true state, the processor sets the "time-up" variable to a true state (357), which, as will be seen subsequently, will effect the execution of the process.

The processor next determines if the redispatch time for the new process is (a) not equal to zero and (b) if it is less than the system time (which was set equal to clock time in the step 336). If the result of this determination (358) is yes, the computer sets the "time-up" variable to a true state (359). Otherwise, the processor omits the step 359.

The processor next determines if a redispatch event has occurred (360). This is accomplished by logically ANDing the system event word (indicative of presently active system redispatch event has occurred, calling for execution of the new process.

The processor then performs a logical AND NOT operation between the system event word and the reset event word for the new process in the process entry table (361). This AND NOT operation removes the events in the reset event word from the system event word. The processor next replaces the reset event word for the new process in the process entry table with a value of zero (362).

Therefore, when the step 361 is executed, the reset event word is a zero if the scheduler has examined the new process one or more times previously without executing the process. This is because, in the step 362, the reset·event word for an unexecuted process is set equal to zero. If, on the other hand, the last time the processor had examined the new process, the new process had been executed, the reset event word is equal to the events signaled during the previous execution of the new process (the new event word from the step 349).

The computer then determines if the variable "time-up" is in a true state or if the return event word is not equal to zero (363). If neither of these conditions are met, then neither a redispatch time nor a redispatch event have been determined for the new process. If the new process is not to be redispatched, the processor returns to the step 352 and returns through the loop of steps 352-363.

If a redispatch condition has been met, the processor has therefore determined that the new process is to be redispatched. The processor then sets the stack pointer to the stack location entered in the process entry table for the new process (364) and exits to execute the new process.

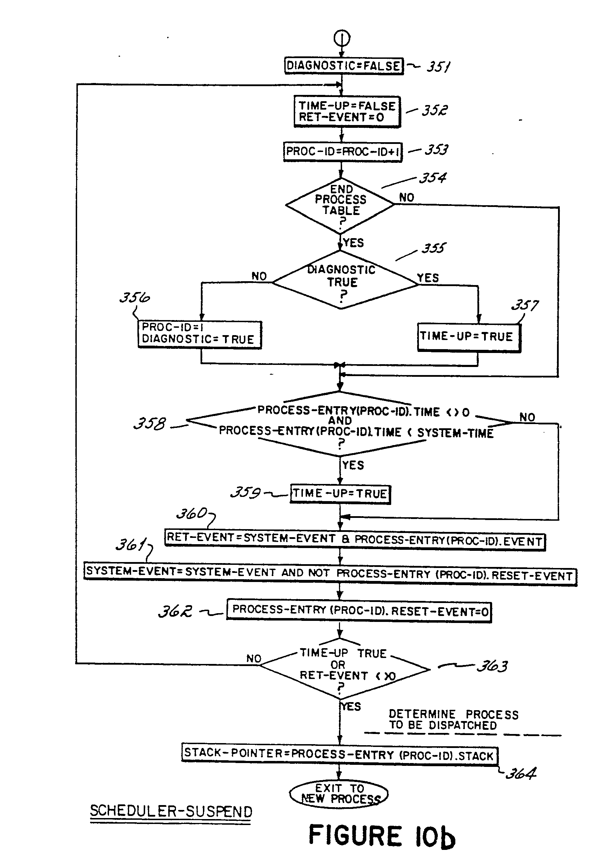

Whenever, in the course of execution of a process, that process wishes to signal an event, the scheduler is called to execute a scheduler-signal routine. As shown in Figure 11, the scheduler-signal routine is entered from the calling process, and the event parameter, the particular event to be signaled, is logically ORed with the signal event word for the computer designated by the process making the signal call (366). The processor, in executing the scheduler-signal routine, can write an event to the signal event word for either computer. In this way events can be signaled from one computer to the other. If the signaled event is already present in the signal event word for the designated computer, the signal event word does not change. If the signaled event is not present in the signal event word for the designated computer, the signaled event is added to the signal event word (by changing the appropriate bit in the word), and the processor exits from the scheduler-signal routine and returns to the process being executed.

In the exemplary controller 200, the controller functions are divided between the supervisory computer 203 and the manipulator computer 205. Each of the two master computers executes a number of processes in order to carry out the respective computer functions. The supervisory computer processes supervise the overall console operation and operator interaction. The supervisory computer updates status and display information and processes input key strokes from the local keyboard. The supervisory computer also executes a workpiece identification process, and recognizes the activation of a start switch at the work robot work station. In response to the activation of the start switch, the supervisory computer selects the appropriate paint spraying program from the bubble memory based upon the workpiece identification and supplies the program instructions to the manipulator computer.

The manipulator computer executes functions primarily concerned with driving the work robot and recording commands from the simulator robot. The manipulator computer receives the program instructions for the selected program from the supervisory computer, during a work session, and outputs the desired position commands, on a command by command basis, to the work robot axis control circuit. The manipulator computer also monitors the status of the workpiece conveyor control and the status of the work robot hydraulic system.

Each of the computers, the supervisory computer 203 and the manipulator computer 205, also execute a similar diagnostic routine as the final, or default, process of the processes executed by each computer. Each computer 203, 205 also performs a watchdog routine to monitor the continued operation of the other computer. This watchdog process shall be described hereinafter.

Each group of processes is concurrently processed by its respective computer using the round robin scheduler described above. Interface routines are used to perform functions which may be called by one or more of the processes or by another interface routine. The particular modular subdivisions selected in implementing each of the computers of the controller 200 are not critical. A greater or lesser number of processes and/or interface routines may be used depending upon the number of functions to be performed and the degree of complexity desired for each process or interface module of software.

In the present implementation of the controller 200, and the master computers therein, a number of hardware interrupts are used to perform parts of certain of the functions of the controller. In response to a hardware interrupt, the processor ceases execution of its current process or routine and saves all of the information such as register

values necessary to resume the process. The processor then performs the interrupt routine and returns to the process. All of the necessary registers and other memory locations are restored to their former condition, and the remainder of the process is executed. The performance of interrupt routines is substantially transparent to the processes executed by the processor.

Hardware interrupts are initiated by the occurrence of an event, such as the depression of a key on the keyboard or the activation of a start switch or the like. A hardware interrupt may also be time-related such as to periodically update a current time variable from a real time hardware clock. In the supervisory computer, there is a hardware interrupt when block of data has been fully read from either the bubble memory or from the cassette unit. There is also a hardware interrupt when a key is struck on the keyboard or in response to an input from a remote keyboard. In addition, the real time timer is handled on a hardware interrupt basis. The manipulator computer also has a timer interrupt and a hardware interrupt for a conveyor state change, such as the activation of a start switch or a stoppage of the conveyor. The axis position updating by the manipulator computer, in the form of supplying axis position commands to the axis controller circuit 206, is also handled on a hardware interrupt basis.

Each interrupt routine performed in response to a hardware interrupt is a part of one of the software modules. As such, data for that module is accessible to the interrupt routine as it is to the other routines of the module. Consequently, during the execution of a hardware interrupt routine, certain data used by other routines, or a process, in the module may be effected. Therefore, it is necessary during certain portions of non-interrupt routines to prevent the occurrence of a hardware interrupt so that data being read during the routine is not changed, during reading, by an interrupt routine. Consequently, during the execution of critical portions of a routine, hardware interrupts may be disabled.

For example, in the supervisory computer, a local keyboard process retrieves key stroke identification information from a keyboard queue to be passed along to the appropriate software module depending upon the type of key which has been activated. The local keyboard process can call an appropriate interface routine for further handling of the key stroke identification, which in turn may signal a particular event in the system event word to effect the execution of an appropriate process to deal with the key stroke information. The local keyboard process is called by the activation of an appropriate bit in the system event word. This bit is set by a keyboard interrupt routine, which is in turn called on a hardware interrupt basis whenever a key is depressed at the local keyboard.

The depression of a key produces a hardware interrupt which calls the keyboard interrupt routine. The keyboard interrupt routine takes the identification of the depressed key and places it in the keyboard queue, and also signals the appropriate bit in the system event word to call the local keyboard process.

When the local keyboard process is operating, to take the activated key identification information from the keyboard queue, it is necessary to prevent another hardware interrupt which might change the information in the queue during the time that the queue is actually being read by the local keyboard process. Consequently, during this time, the hardware interrupts are disabled by the local keyboard process until the information has been completely read from the queue.

With reference now to Figures 12-16, the execution by the supervisory processor of two processes in cooperation with an interface routine shall be described. In the supervisory computer, a part identification process 371 checks workpiece identification photocell signals from an array of photocells at a workpiece identification station in order to place the identification of recognized workpieces into a queue. A sequence process 372 retrieves workpiece identifications from the queue as each workpiece approaches the work station to permit proper selection of a painting program for the particular workpiece identified.

The part identification process is illustrated in simplified form in the flow chart of Figure 13. When the supervisory processor begins execution of the process, it gets the current photocell conditions (401) of the photocells in the array at the workpiece identification station. The processor then checks to determine if a strobe pulse is present, such as a rising edge of a strobe photocell output, indicating that the workpiece is at the requisite workpiece identification location (402). If a strobe signal is present, the processor calls a Q-PUT routine in a queue interface module 373 (403). The part identification process, in calling the queue module, passes on the photocell identification signals for the workpiece.

After calling the Q-PUT routine, or after bypassing this step if no strobe signal is present, the processor then calls the scheduler-suspend routine of Figure 10. The part identification process passes on a redispatch time condition of T and no redispatch event (404). The time T is placed in the process entry table as the redispatch time for the part identification process. The part identification process will then be redispatched, after the passage of the time T, by the scheduler. At that time, the process will again check the photocell identification signals and check for the presence of a strobe signal.

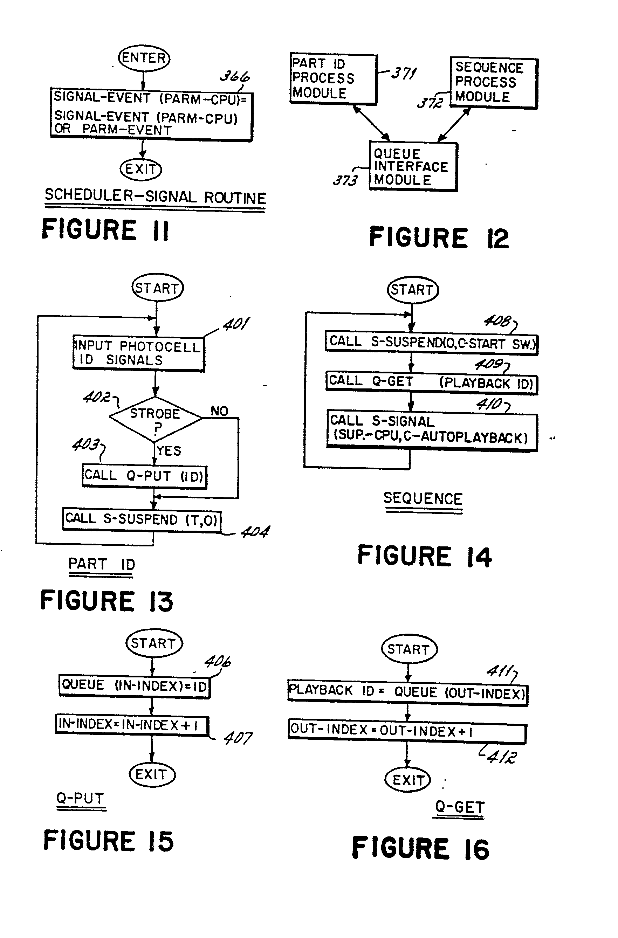

Returning to the part identification process, if a call is made to the Q-PUT routine in the queue module, the processor executes the Q-PUT routine illustrated in Figure 15. The queue is an array of memory locations which includes two pointers, an "in index" and an "out index". When the Q-PUT routine is called, the processor places the workpiece photocell identification signals, in the form of an eight-bit word, in the part identification queue at the in index location (406). The processor then increments the in index pointer (407) and exits from the routine.

A portion of the sequence process which is related to the part identification function is illustrated in Figure 14. In the simplified form illustrated, the sequence process begins with a call to the scheduler-suspend routine (408). The redispatch condition given to the scheduler is the activation of a start switch, indicative of the approach of a workpiece to the work robot work station. There is no time condition for the sequence process, and therefore the process will not be redispatched until the next workpiece reaches the work station, activating the start switch. Therefore, when the suspend process is redispatched, it begins execution of the step after the call to the scheduler-suspend routine in the step 408. When the sequence process is redispatched, it calls the Q-GET routine in the queue interface module, specifying a memory location used by the sequence process in which a workpiece playback identification is to be placed (407).

The processor then executes the Q-GET routine of Figure 16. First the processor places the part identification word in the queue which is designated by the out index pointer into the playback identification memory location specified by the sequence process (411). The processor then increments the out index pointer (412) and returns to the sequence process. The processor then calls the scheduler signal routine to signal an event (410). The event, which is written to the supervisory computer signal event word, is a call for an auto playback process. When the auto playback process is redispatched by the scheduler, the workpiece identification is retrieved so that the correct painting program can be selected for painting the workpiece.

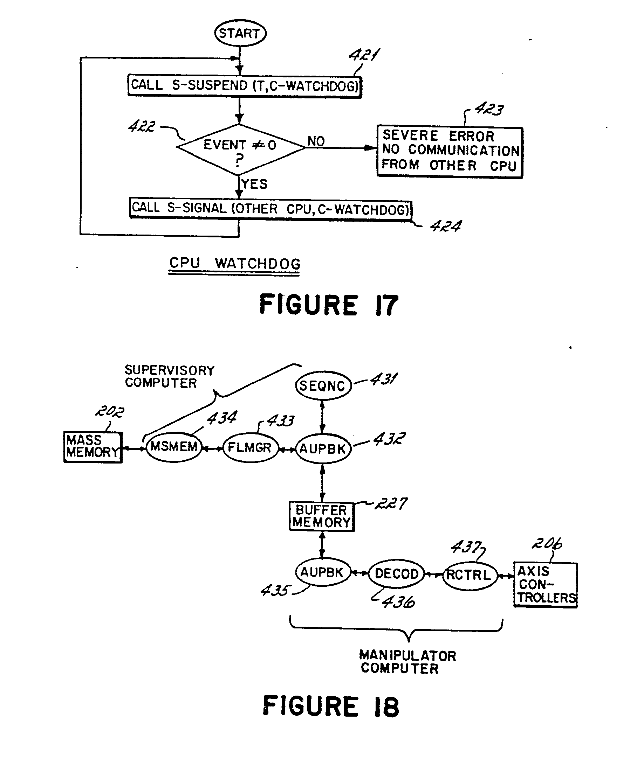

A process of particular utility with the multi-master computer arrangement in the controller 200 is illustrated in Figure 17. This process is a watchdog process wherein each master computer monitors the continued operation of the other computer. Substantially the same process is executed by each of the two master computers.

The watchdog process executed by each processor begins with a call to the scheduler-suspend routine (421). The watchdog process suspends on two conditions: the passage of a time interval T or a watchdog call in the system event word for that processor. When the process is redispatched, the processor determines if the redispatch condition is an event (422). If the redispatch condition is not an event, then the watchdog call from the other computer was not received within the time interval T, and the redispatch condition is a time-out of the interval T. In such a case, there is a severe error condition since there is no communication from the other computer. This error condition can then be indicated by an appropriate alarm or display message or the like.

If there is an event which redispatched the watchdog process, then the watchdog call, received from the other computer within the time interval T, is that event. The processor then calls the scheduler-signal routine and writes a watchdog event call to the signal event word of the other computer (424). The processor then makes a suspend call to the scheduler in the step 421. The signal event written to the signal event word of the other computer will subsequently serve as the redispatch condition for the other computer. As long as the computers continue to operate normally, exchanging watchdog calls, no error indication is produced.

As a further example of the interaction of processes and interface routines in the operation of the controller 200, the modules employed in driving the work robot in accordance with a stored program are illustrated in Figure 18. As described above, with regard to Figures 12-16, the sequence process in a sequence module 431 of the supervisory computer is redispatched upon the occurrence of a start switch event. The start switch event is a signal from a start switch at the work station which is produced when a workpiece to be painted by the work robot is approaching the work station.

When the sequence process is redispatched, as earlier described, it obtains the identification of the workpiece from the part identification queue. The sequence process also signals an event, after obtaining the workpiece identification, that the start switch has been activated, which event is a redispatch condition for the auto playback process in the auto playback module 432.

When the auto playback process is redispatched, it calls a file manager OPEN routine in the file manager module 433 to prepare a file for the painting program for the identified workpiece. The called file manager routine in turn utilizes a mass memory READ routine in a mass memory program module 434 to determine the physical address in the mass memory 202 at which the desired program is located. The file manager OPEN routine provides the mass memory READ routine with an address in the bubble memory file directory, and part of the file directory is written to a file manager module memory location. The bubble memory file directory is a table containing program addresses in the bubble memory for the painting programs. Each time the computer calls for a bubble memory read, the auto playback process suspends, at the level of the mass memory READ routine, with a redispatch event occurring when the bubble memory has written a block of data to the computer. The completion of the mass memory read is signaled as a hardware interrupt, and the auto playback process is then redispatched. The file manager OPEN routine continues to call for parts of the file directory until the program address for the identified part is obtained.

The auto playback process then calls a file manager READ routine to begin reading blocks of the desired program from the bubble memory. The first block of instructions is written to a transfer buffer in the buffer memory. The process then suspends. When the manipulator computer signals the event that the block has been read from the transfer buffer (and written into a decode buffer in the buffer memory), the auto playback process is redispatched to read the next instruction block from the file manager module and write this block into the transfer buffer.

The auto playback process in the auto playback module 435 in the manipulator computer is signaled when a block of instructions has been written into the transfer buffer in the buffer memory 227. The auto playback process in the supervisory computer, after writing a complete block of instructions to the buffer memory 227, redispatches the auto playback process in the manipulator computer by setting the appropriate event bit in the manipulator computer system event word in the buffer memory.

The auto playback process in the manipulator computer writes the block of instructions to the decode buffer in the buffer memory, signals the supervisory computer, and calls a decode PUT routine in a decode interface module 436. When the auto playback process calls the decode PUT routine, it passes to the routine the address for the block of instructions. The decode PUT routine in the decode module reformats the block of instructions and places the instruction commands in a decode module memory location in a form in which they can be retrieved for use by the axis controller circuit 206. The process then suspends.

The robot control process has been suspended on an interrupt event which is signaled when the next instruction is needed for supplying commands to the axis controller circuit.

When the robot control process is redispatched, it calls the decode GET routine to obtain the next instruction in the block of instructions and again suspends. As each instruction is used by the robot control process, the auto playback process, in the decode PUT routine, writes another instruction to be used by robot control. When the complete block of instructions is used, the auto playback process checks the transfer buffer to determine if another block of instructions is available. Blocks of instructions are written from the transfer buffer to the decode buffer in the buffer memory by the auto playback process as they become available from the supervisory computer.

The robot control process stores the instructions it retrieved from the decode module in memory locations in the robot control module. The robot control interrupt routine reads these instructions to supply commands, on a command by command basis, to the axis controller circuit 206, and also to supply gun commands to the work robot gun.

CLAIMS:

1.    A robot control system for concurrently performing a number of robot control functions including driving a work robot having a number of articulated robot links under closed loop servo control in response to a stored sequence of recorded link position commands in which each robot link has an associated link actuator and a link position feedbock transducer which provides a feedback signal correlated to link position, characterised in that the system also includes memory means for storing a sequence of recorded link position commands; first means, including a first computer, for sequentially retrieving stored robot link

position commands for each robot link from the memory means, calculating a link position error signal in response to a retrieved link position command and the link position feedback signal input from the associated link position feedback transducer, and outputting the link position error signal to the associated link actuator to drive the link to a command position; a second computer for executing control functions in the robot control system not performed by the first computer; and a common bus coupled to the memory means and to the first computer and the second computer, each said computer being a bus master computer capable of initiating communication on the bus.

2.      The improvement of claim 1 in which the first means includes means for calculating a link position error signal in response to a retrieved link position command and the link position feedback signal input from the associated link position feedback transducer and for outputting the link position error signal to the associated link actuator to drive the link to a command position, and in which the first computer comprises means for sequentially retrieving stored robot link position commands for each robot link from the memory means on the bus and for coupling the commands to said calculating and outputting means.

3.      A robot control system for performing a number of robot control functions including driving a work robot having a number of articulated robot links under closed-loop servo control in response to a stored sequence of recorded link position commands in which each robot link has an associated link actuator and a link position feedback transducer which provides a feedback signal correlated to link position, comprising:

a first computer;

a second computer;

a common bus coupled to the first computer and to the second computer, each computer being a bus master capable of initiating communication on the bus; and

axis controller circuit means for calculating a link position error signal in response to a retrieved link position command and the link position feedback signal input from the associated link position feedback transducer and for outputting the link position error signal to the associated link actuator to drive the link to a command position, the first computer and the second computer cooperating to provide means for sequentially retrieving stored robot link position commands for each robot link and for coupling said commands to the axis controller means.

4.      A control system as claimed in any of the preceding claims including mass memory means coupled to the bus for storing sequences of recorded link position commands, a buffer memory coupled to the bus and in which the first computer is coupled to a control input and is responsive thereto to read a sequence of recorded link position commands from the mass memory means and to write said sequence of recorded link position commands to the buffer memory, and in which the second computer is operable to couple the sequence of recorded link position commands from the buffer memory to the axis controller circuit means.

5.      A method of driving a work robot having a number of articulated robot links under closed-loop servo control in response to a stored sequence of recorded link position commands in which each robot link has an associated link actuator and a link position feedback transducer which provides a feedback signal correlated to link position, comprising the steps of:

storing a sequence of link position commands in a command program memory;

writing the stored sequence of link position commands from the program memory to a buffer memory using a first computer;

writing the sequence of link position commands from the buffer memory to an axis controller circuit using a second computer; and

in the axis controller calculating a link position error signal in response to a link position command written to the axis controller and the link position feedback signal input from the associated link position feedback transducer and outputting the link position error signal to the associated link actuator to drive the link to a command position.

6.     A robot control system for performing a number of robot control functions including driving a work robot having a number of articulated robot links under closed-loop servo control in response to a stored sequence of recorded link position commands in which each robot link has an associated link actuator and a link position feedback transducer which provides a feedback signal correlated to link position, comprising:

memory means for storing a sequence of recorded link position commands;

a buffer memory;

a common bus coupled to the memory means and to the buffer memory;

supervisory computer means coupled to the bus for reading a stored sequence of recorded link position commands from the memory means and for writing said sequence of recorded link position commands to the buffer memory;

axis controller means coupled to the bus and to each link position feedback transducer of the work robot for calculating a link position error signal in response to a retrieved link position command and the link position feedback signal input from the associated link position feedback transducer and for outputting the link position error signal to the associated link actuator to drive the link to a command position;

manipulator computer means coupled to the bus for retrieving link position commands from the buffer memory and for coupling said link position commands to the axis controller means; and

each said computer including means for writing signals to the buffer memory and each said computer including means for reading the signals written to the buffer memory by the other computer so that each computer can monitor the continued operation of the other computer.

7.    A robot control system for concurrently performing a number of robot control functions including driving a work robot having a number of articulated robot links under closed-loop servo control in response to a stored sequence of recorded link position commands in which each robot link has an associated link actuator and a link position feedback transducer which provides a feedback signal correlated to link position, comprising:

means, including a first computer, for sequentially retrieving stored robot link position commands for each robot link, calculating a link position error signal in response to a retrieved link position command and the link position feedback signal input from the associated link position feedback transducer, and outputting the link position error signal to the associated link actuator to drive the link to a command position;

**0125776**

means, including a second computer, for performing robot control functions;

a common bus coupled to the first computer and to the second computer, each computer being a bus master capable of initiating communication on the bus; and

memory means, inculding a particular memory location, coupled to the bus, the first computer including means for periodically writing to said memory location and the second computer including means for periodically reading said memory location and for producing an indication of a fault condition if the first computer fails to write to said memory location at at least a certain rate.

8.     A method of performing a number of work robot control functions including driving a work robot having a number of articulated robot links under closed loop servo control, in response to a recorded sequence of link position commands, in which routines in several separate computer program process modules are executed, comprising the steps of:

(a)   executing a program process in a process module to perform a work robot control function up to a program step identified as a suspend location in the process;

(b)   writing redispatch conditions as a redispatch word for the process into a process entry table in a computer memory location;

(c)   comparing a system event word representative of present conditions with each redispatch word for the processes in the process entry table;

(d)   executing a process whose redispatch word matches the system event word in regard to one or more conditions; and

(e)   repeating the steps (a) through (d) to perform the work robot control functions.

9.   The method of claim 8 in which in the step (c) the system event word is compared with a redispatch word for each process in sequence so that the comparison is not made twice for a process before it is made once for every other process.

10.   The method of claim 9 which comprises the additional steps, after the step (d), of:

(d1)   identifying a process in the sequence of processes as a diagnostic process; and

(d2)   executing the diagnostic process if, since the redispatch word of the diagnostic process was last compared with the system event word, no other process has been executed.

FIGURE 1

FIGURE 2

FIGURE 3

0125776

```
        (START)
          |
      ┌───────────────────────┐
  301─┤SAMPLE, CONVERT AND    │
      │RECORD DESIRED WORK    │
      │ROBOT LINK POSITION    │
      └───────────────────────┘
          |
      ┌───────────────────────┐
      │SAMPLE GUN SWITCH      │
      │CONDITION              │
      └───────────────────────┘
       302
          |
        /‾‾‾\
       / SIX \      NO
 303──<  AXES >─────────────────►
       \  ?  /
        \___/
          | YES
       304
      ┌───────────────────────┐
      │RECORD GUN SWITCH      │
      │CONDITION              │
      └───────────────────────┘
          |
        /‾‾‾‾‾\
       / EIGHT \    NO
 305──< GROUPS  >────────────────►
       \RECORDED/
        \  ?  /
          | YES
       306
        /‾‾‾‾‾\
       /  END  \    NO
      < PROGRAM >───────────────►
       \ENTERED/
        \  ?  /
          | YES
        (END)
```

SIMULATOR ROBOT
DATA CONVERSION

# FIGURE 4

```
        (START)
          |                      311
      ┌───────────────────────────┐
      │FETCH GUN SWITCH CONDITION │
      │COMMANDS FROM CONTROLLER   │
      │MEMORY                     │
      └───────────────────────────┘
          |                      312
      ┌───────────────────────────┐
      │OUTPUT GUN SWITCH CONDITION│
      │COMMANDS TO ROBOT GUN SW.  │
      │FROM ROBOT CONTROLLER      │
      └───────────────────────────┘
          |                      313
      ┌───────────────────────────┐
      │FETCH POSITION COMMAND FROM│
      │ROBOT CONTROLLER MEMORY    │
      └───────────────────────────┘
          |                      314
      ┌───────────────────────────┐
      │INPUT ACTUAL POSITION OF ROBOT│
      │LINK FROM LINK POSITION TRANS-│
      │DUCER TO ROBOT CONTROLLER  │
      └───────────────────────────┘
          |                      315
      ┌───────────────────────────┐
      │COMPUTE ERROR IN ROBOT     │
      │CONTROLLER BETWEEN COM-    │
      │MAND & ACTUAL LINK POSITIONS│
      └───────────────────────────┘
          |
      ┌───────────────────────────┐
      │OUTPUT ERROR FROM ROBOT    │
      │CONTROLLER TO ROBOT        │
      │LINK ACTUATOR              │
      └───────────────────────────┘
          |                      316
     NO /‾‾‾\
   ◄────< SIX >
        \AXES/   317
         \ ? /
          | YES
        /‾‾‾‾‾\        318
   NO  / EIGHT \
 ◄────< GROUPS  >
        \  ?  /
          | YES
        /‾‾‾‾‾\        319
   NO  /  END  \
 ◄────< PROGRAM >
        \  ?  /
          | YES
        (END)
```

ROBOT CONTROLLER
PROGRAM
EXECUTION

# FIGURE 5

SOFTWARE SYSTEM ARCHITECTURE

# FIGURE 6

| PROCESS NBR. I CODE LOCATION | STACK LOCATION |
|---|---|
| PROCESS NBR. 2 CODE LOCATION | STACK LOCATION |
| | |
| PROCESS NBR. N CODE LOCATION | STACK LOCATION |

# FIGURE 8

PROCESS INITIALIZATION TABLE

| PROCESS NBR. I STACK POINTER | REDISPATCH TIME | REDISPATCH EVENT | RESET EVENT |
|---|---|---|---|
| PROCESS NBR. 2 STACK POINTER | REDISPATCH TIME | REDISPATCH EVENT | RESET EVENT |
| | | | |
| PROCESS NBR. N STACK POINTER | REDISPATCH TIME | REDISPATCH EVENT | RESET EVENT |

PROCESS ENTRY TABLE

# FIGURE 7

0125776

```
                    (START)
                       |
                       v                      321
    ┌──────────────────────────────────┐
    │ EXECUTE  INITIALIZATION  ROUTINE  │
    └──────────────────────────────────┘
                       |
                       v                      322
    ┌──────────────────────────────────┐
    │ TIME = CLOCK  TIME                │
    └──────────────────────────────────┘
                       |
                       v                      323
    ┌──────────────────────────────────┐
    │              N=1                  │
    └──────────────────────────────────┘
                       |
      ┌─────────────── v ─────────────────────┐
      │ ┌────────────────────────────────┐    │
      │ │ PUT PROCESS (N) CODE LOCATION  │  324
      │ │ ADDRESS IN PROCESS (N) STACK   │
      │ │ LOCATION IN INIT. TABLE        │
      │ └────────────────────────────────┘
      │                | 
      │                v
      │ ┌────────────────────────────────┐
      │ │ PUT PROCESS(N) INIT. TABLE STACK│ 325
      │ │ LOCATION ADDRESS IN PROCESS(N)  │
      │ │ ENTRY TABLE STACKLOCATION       │
      │ └────────────────────────────────┘
      │                |
      │                v
      │ ┌────────────────────────────────┐
      │ │ IN ENTRY TABLE FOR PROCESS(N): │
      │ │   SET TIME = TIME-1            │  326
      │ │   SET EVENT=0                 │
      │ │   SET RESET-EVENT=0           │
      │ └────────────────────────────────┘
      │                |
      │                v
      │ ┌────────────────────────────────┐
      │ │           N=N+1                │  327
      │ └────────────────────────────────┘
      │                |
      │          NO    v
      └──────────◇ END ENTRY TABLE ? ◇    328
                       |
                       | YES
                       v                      329
    ┌──────────────────────────────────┐
    │ SIGNAL EVENT (CPU)=0              │
    │ SYSTEM EVENT =0                   │
    └──────────────────────────────────┘
                       |
                       v                      330
    ┌──────────────────────────────────┐
    │ GET FIRST PROCESS STACK POINTER   │
    │ FROM ENTRY TABLE                  │
    └──────────────────────────────────┘
                       |
                       v
                    (END)
```

SCHEDULER  INITIALIZATION

# FIGURE 9

FIGURE 10a

0125776

ENTER FROM
OLD PROCESS

SYSTEM-TIME = CLOCK-TIME  _336_

NEW-EVENT= SIGNAL-EVENT (CPU)  _337_
SIGNAL-EVENT (CPU) = O

_ _ _ GET TIME & EVENTS _ _ _

SYSTEM-EVENT=SYSTEM-EVENT OR  ~338
NEW-EVENT

_ _ UPDATE SYSTEM EVENTS _ _

N=1  ~339

PROCESS-ENTRY (N). RESET-EVENT=
PROCESS-ENTRY (N). RESET-EVENT AND NOT NEW-EVENT
_340

N=N+1  ~341

NO ← END PROCESS TABLE ?  _342

YES

CLEAR PROCESS TABLE
RESET EVENTS

PROCESS-ENTRY (PROC-ID). STACK= STACK-POINTER  _343

PROCESS-ENTRY (PROC-ID). EVENT(S) = REDISPATCH-EVENT (S)  ~344

TMP-TIME=O  _345

_346

REDISPATCH -TIME )O ?  NO

YES

TMP-TIME = (SYSTEM-TIME+ REDISPATCH TIME)  _347

PROCESS-ENTRY (PROC-ID). TIME =TMP-TIME  _348

PROCESS-ENTRY (PROC-ID). RESET-EVENT= NEW-EVENT  ~349

①

SAVE ON PROCESS STATE
_ _ SET UP REDISPATCH CONDITIONS

0125776

DIAGNOSTIC=FALSE — 351

TIME-UP=FALSE
RET-EVENT=0 — 352

PROC-ID=PROC-ID+1 — 353

354
END PROCESS TABLE? — NO

YES — 355
DIAGNOSTIC TRUE? — NO / YES

356
PROC-ID=1
DIAGNOSTIC= TRUE

357
TIME-UP=TRUE

358
PROCESS-ENTRY(PROC-ID).TIME < > 0
AND
PROCESS-ENTRY(PROC-ID).TIME < SYSTEM-TIME? — NO

YES

359 — TIME-UP=TRUE

360
RET-EVENT=SYSTEM-EVENT & PROCESS-ENTRY(PROC-ID).EVENT

361
SYSTEM-EVENT=SYSTEM-EVENT AND NOT PROCESS-ENTRY(PROC-ID).RESET-EVENT

362 — PROCESS-ENTRY(PROC-ID).RESET-EVENT=0

363
TIME-UP TRUE OR RET-EVENT < >0? — NO

YES

DETERMINE PROCESS TO BE DISPATCHED

STACK-POINTER=PROCESS-ENTRY(PROC-ID).STACK
364

EXIT TO NEW PROCESS

SCHEDULER-SUSPEND

FIGURE 10b

## FIGURE 11

ENTER

SIGNAL-EVENT (PARM-CPU)=
SIGNAL-EVENT (PARM-CPU)
OR PARM-EVENT

_366_

EXIT

SCHEDULER-SIGNAL ROUTINE

## FIGURE 12

PART ID PROCESS MODULE — _371_

SEQUENCE PROCESS MODULE — _372_

QUEUE INTERFACE MODULE — _373_

## FIGURE 13

START

INPUT PHOTOCELL ID SIGNALS — _401_

_402_ STROBE ? — NO

_403_ YES

CALL Q-PUT (ID)

CALL S-SUSPEND (T,O) — _404_

PART ID

## FIGURE 14

START

CALL S-SUSPEND(O,C-START SW.) — _408_

CALL Q-GET (PLAYBACK ID) — _409_

CALL S-SIGNAL (SUP.-CPU, C-AUTOPLAYBACK) — _410_

SEQUENCE

## FIGURE 15

START

QUEUE (IN-INDEX)=ID — _406_

IN-INDEX=IN-INDEX+1 — _407_

EXIT

Q-PUT

## FIGURE 16

START

PLAYBACK ID = QUEUE (OUT-INDEX) — _411_

OUT-INDEX = OUT-INDEX+1 — _412_

EXIT

Q-GET

CPU WATCHDOG

**FIGURE 17**

MANIPULATOR
COMPUTER

**FIGURE 18**